# EUROPÄISCHE PATENTSCHRIFT

(11) **EP 3 715 145 B1**
(45) Veröffentlichungstag und Bekanntmachung des Hinweises auf die Patenterteilung: **29.12.2021**
(21) Anmeldenummer: 20155049.8
(22) Anmeldetag: 03.02.2020
(51) Int. Cl.: B60C 11/03, B60C 11/12

(54) **FAHRZEUGLUFTREIFEN**
PNEUMATIC TYRE
PNEUMATIQUE DE VÉHICULE

(30) Priorität: 28.03.2019 DE 102019204327
(43) Veröffentlichungstag der Anmeldung: 30.09.2020
(73) Patentinhaber: Continental Reifen Deutschland GmbH, 30165 Hannover (DE)
(72) Erfinder: Schlittenhard, Jan, 30419 Hannover (DE); Bauer, Claudia, 30419 Hannover (DE); Vennebörger, Martin, 30419 Hannover (DE)
(74) Vertreter: Continental Corporation

(56) Entgegenhaltungen:
- EP-A1- 1 630 007
- EP-A1- 2 765 012
- EP-A1- 2 857 225
- EP-A1- 3 228 477
- EP-A2- 2 821 212
- DE-A1-102012 209 246
- DE-T2- 69 826 761
- JP-A- 2004 345 433
- JP-A- 2011 000 991

## Beschreibung

Die Erfindung betrifft einen Fahrzeugluftreifen mit einem laufrichtungsgebunden profilierten Laufstreifen mit Profilblöcken mit jeweils einem oder mehreren parallel zueinander ausgerichteten, unter einem Winkel von 0° bis zu 45° zur axialen Richtung verlaufenden, den jeweiligen Profilblock durchquerenden Einschnitt(en) mit einer Breite von 0,4 mm bis 1,0 mm und einer Tiefe von bis 100% der Profiltiefe, wobei die durchquerenden Einschnitte die Profilblöcke in Blocksegmente gliedern, sodass die Profilblöcke beim Abrollen des Reifens bei Vorwärtsfahrt jeweils ein zuerst in den Untergrund eintretendes randseitiges, einlaufendes Blocksegment und jeweils ein randseitiges, auslaufendes Blocksegment aufweisen.

Ein derartiger Fahrzeugluftreifen ist beispielsweise aus der WO 2017/092898 A1 bekannt. Der laufrichtungsgebunden profilierte Laufstreifen dieses Reifens weist über die Laufstreifenbreite V-förmig zueinander verlaufende Schrägrillen und zwischen diesen verlaufende im Wesentlichen in Umfangsrichtung orientierte Kurzrillen auf, welche gemeinsam mittlere und schulterseitige Profilblöcke begrenzen. Die mittleren und schulterseitigen Profilblöcke sind jeweils mit einer Anzahl von durchquerenden, in Draufsicht innerhalb der Profilblöcke parallel zueinander verlaufenden Einschnitten mit einer Breite von 0,4 mm bis 0,6 mm und einer Tiefe von maximal 100% der Profiltiefe versehen, wobei in den schulterseitigen Profilblöcken die Einschnitte die Profilblöcke in parallelogrammförmige Blocksegmente gliedern.

Aus der JP 2004 345 433 A ist ein Fahrzeugluftreifen mit einem Laufstreifen mit in Profilblockreihen angeordneten Profilblöcken bekannt. In jedem Profilblock sind parallel zueinander ausgerichtete, im Wesentlichen in axialer Richtung verlaufende, den Profilblock durchquerende Einschnitte ausgebildet, sodass jeder Profilblock ein beim Abrollen des Reifens bei Vorwärtsfahrt zuerst in den Untergrund eintretendes randseitiges einlaufendes Blocksegment und ein randseitiges, auslaufendes Blocksegment aufweist. Im randseitigen, einlaufenden Blocksegment befindet sich ein in Draufsicht parallel zu den weiteren Einschnitten verlaufender geschlossener Einschnitt. Im randseitigen, auslaufenden Blocksegment sind mehrere in Umfangsrichtung verlaufende geschlossene Einschnitte ausgebildet. Der Reifen soll gute Bremseigenschaften auf Eis und/oder Schnee aufweisen.

Aus der EP 2 821 212 A2 ist ein weiterer Fahrzeugluftreifen mit einem Laufstreifen mit Profilblöcken mit geschlossenen Einschnitten und mit durchgehenden Einschnitten bekannt, welcher in einer speziellen Reifenheizform vulkanisiert worden ist.

Die DE 698 26 761 T2 offenbart einen Fahrzeugluftreifen mit einem Laufstreifen, welcher gemäß einem Ausführungsbeispiel Profilblöcke mit zwei durchquerenden Einschnitten und daher mit randseitigen Blocksegmenten aufweist. In dem einen randseitigen Blocksegment ist ein geschlossener Einschnitt ausgebildet. Sämtliche Einschnitte verlaufen in Draufsicht betrachtet in axialer Richtung.

Fahrzeugluftreifen eingangs genannter Art haben sich im Hinblick auf ihre Fahreigenschaften unter winterlichen Fahrbedingungen, insbesondere hinsichtlich eines guten Schneegriffs, als vorteilhaft erwiesen. Die jüngeren Entwicklungen in der Fahrzeugindustrie führten zu zunehmend schwereren und leistungsstärkeren, besonders hohe Drehmomente aufweisenden Fahrzeugen, insbesondere auch im Segment der elektromotorisch angetriebenen Fahrzeuge. Darüber hinaus werden Fahrzeuge immer öfter mit elektronischen Assistenzsystemen, wie ABS, ASR oder ESP, ausgestattet.

Beim Fahren, insbesondere auf Schnee und/oder Eis, werden die im Laufstreifen der Reifen auftretenden Verformungen von den elektronischen Assistenzsystemen des Fahrzeuges mitunter fehlinterpretiert, sodass diese Assistenzsysteme in der Folge unerwünschter Weise etwa die Motorleistung drosseln und/oder den Bremsdruck reduzieren, wodurch die Beschleunigungszeit und der Bremsweg verlängert werden. Dies kann zur Beeinträchtigung der Fahrsicherheit führen.

Der Erfindung liegt daher die Aufgabe zu Grunde, bei einem Fahrzeugluftreifen der eingangs genannten Art, die Brems- und Traktionseigenschaften unter winterlichen Fahrbedingungen, also auf Schnee und/oder Eis, zu verbessern, insbesondere um die erwähnten Fehlinterpretationen von elektronischen Assistenzsystemen zu vermeiden.

Gelöst wird die gestellte Aufgabe erfindungsgemäß dadurch, dass das einlaufende Blocksegment eine größere Außenfläche aufweist als das auslaufende Blocksegment, wobei das einlaufende Blocksegment mit zumindest einem, bezogen auf seine Längserstreckung parallel zu dem bzw. den durchquerenden Einschnitt(en) verlaufenden, geschlossenen Einschnitt mit einer Tiefe von bis zu 100% der Profiltiefe versehen ist, wobei das auslaufende Blocksegment keinen geschlossenen Einschnitt aufweist und wobei der zumindest eine geschlossene Einschnitt eine sich über seine Erstreckung ändernde Breite aufweist, welche an einem seiner oder an beiden seiner Enden am größten ist, wobei die Breite an der bzw. den breitesten Stelle(n) des geschlossenen Einschnittes 130% bis 350%, insbesondere mindestens 200%, der Breite an seiner schmalsten Stelle entspricht.

Der erfindungsgemäße Reifen weist im Laufstreifen Profilblöcke mit "einlaufenden" größeren Blocksegmenten, welche mit zumindest einem geschlossenen Einschnitt versehen sind, und "auslaufenden" kleineren Blocksegmenten auf, sodass die einlaufenden Blocksegmente - gegenüber den auslaufenden Blocksegmenten - eine höhere Umfangsund Quersteifigkeit aufweisen. Es ist daher jeweils jenes Blocksegment, an welchem die sogenannte "leading-edge", also die einlaufende Blockkante, ausgebildet ist, steifer. Der zumindest eine geschlossene Einschnitt sorgt nicht nur für zusätzliche Griffkanten sondern begrenzt die Steifigkeit, insbesondere um einen gleichmäßigen Abrieb zu gewährleisten. Beim Abrollen des Reifens wird das jeweils einlaufende Blocksegment - gegenüber dem aus der WO 2017/092898 A1 bekannten Laufstreifen - deutlich geringer verformt, wodurch die Kontaktfläche dieses Blocksegmentes und damit auch des Profilblockes zum Untergrund erhalten bleibt und die Griffwirkung der "leading-edge" verstärkt ist. Es hat sich gezeigt, dass die "leading-edge" für gute Brems- und Traktionseigenschaften auf Schnee und/oder Eis eine bedeutende Rolle spielt, sodass durch die getroffenen Maßnahmen - gegenüber bekannten Reifen - diese Fahreigenschaften verbessert sind.

Dadurch nimmt auch die Wahrscheinlichkeit, dass etwaige elektronische Assistenzsysteme des Fahrzeuges zu einem ungünstigen Zeitpunkt eingreifen, deutlich ab.

An den Endbereichen der geschlossenen Einschnitte bzw. an den Enden von Randabschnitten der geschlossenen Einschnitte sind demnach "Verdickungen" vorgesehen, welche die Griffwirkung der geschlossenen Einschnitte in diesen Bereichen verbessert. Insbesondere sammelt sich beim Fahren auf Schnee in diesen breiteren Abschnitten schneller Schnee an, was sich günstig auf den Effekt der Schnee-Schnee-Reibung und damit auf die Schneegriffeigenschaften auswirkt.

Bei einer bevorzugten Ausführung ist das einlaufende Blocksegment mit zumindest zwei - bezogen auf ihre Längserstreckung - aufeinanderfolgenden, parallel zu dem bzw. den durchquerenden Einschnitt(en) verlaufenden geschlossenen Einschnitten versehen. Durch die Anzahl der geschlossenen Einschnitte kann gezielt auf die Steifigkeit des einlaufenden Blocksegmentes Einfluss genommen werden und dadurch beispielsweise die Position des jeweiligen Profilblocks im Laufstreifen, etwa ob laufstreifenmittig oder schulterseitig, berücksichtigt werden.

Dabei ist bzw. sind insbesondere der/die geschlossene(n) Einschnitt(e) der/die einzige(n) Einschnitt(e) im einlaufenden Blocksegment. Auch diese Maßnahme ist für eine Beeinflussung der Steifigkeit des einlaufenden Blocksegmentes von Vorteil. Allenfalls können im einlaufenden Blocksegment Mikrorillen ausgebildet sein, die eine Breite und eine Tiefe aufweisen die wesentlich geringer ist, als die Breite und Tiefe der Einschnitte. So weisen Mikrorillen üblicherweise eine Breite von 0,2 mm bis 0,5 mm und eine ebensolche Tiefe auf.

Bevorzugt beträgt die Breite an der schmalsten Stelle der bzw. des geschlossenen Einschnitte(s) 0,4 mm bis 1,0 mm. Bevorzugt ist ferner auch eine Ausführung, bei der geschlossene Einschnitte vorgesehen sind, deren Breite kontinuierlich über ihre Erstreckung zunimmt. Auch diese Maßnahmen sind für die Griffperformance der Einschnitte sowie das Entstehen der bereits erwähnten Schnee-Schnee-Reibung von Vorteil.

Bei einer weiteren bevorzugten Ausführung sind mehrere geschlossene Einschnitte vorgesehen, welche einen schmäler als ihre sonstigen Abschnitte, insbesondere als ihre Randabschnitte, ausgeführten mittleren Abschnitt aufweisen, welcher eine Länge von 50 % bis 75 %, insbesondere von 60 % bis 70 %, der Länge des Einschnittes aufweisen, wobei sämtliche Längen entlang der Verlaufsmittellinie des jeweiligen Einschnittes ermittelt sind. In der Erstreckungsrichtung der geschlossenen Einschnitte dominieren daher vorteilhafterweise die längeren, mittleren Abschnitte.

Eine Anzahl weiterer bevorzugter Ausgestaltungen gestattet es, die Steifigkeit der einlaufenden Blocksegmente auf eine für einen gleichmäßigen Abrieb des Profilblockes günstige Weise auszugestalten, wobei gleichzeitig auch ein Einfluss auf das Ausmaß der Steifigkeit des einlaufenden Blocksegmentes und damit des Profilblockes möglich ist.

Bei einer diesbezüglich vorteilhaften Maßnahme ist der bzw. sind die geschlossene(n)

Einschnitt(e) im mittleren Bereich des einlaufenden Blocksegmentes ausgebildet.

Bei einer weiteren diesbezüglich bevorzugten Maßnahme weisen die geschlossenen Einschnitte, welche sich im selben einlaufenden Blocksegment befinden, in ihrer

Erstreckungsrichtung voneinander sowie zu den Rändern des Blocksegmentes jeweils einen Abstand von 1,0 mm bis 5,0 mm auf.

Bei einer weiteren bevorzugten Ausgestaltung sind Profilblöcke mit einlaufenden Blocksegmenten vorgesehen, in welchen zumindest einer der geschlossenen Einschnitte in Draufsicht flach N-förmig verläuft. Auf diese Weise sind geschlossene Einschnitte gebildet, die eine Art "Zick-Zack" nachbilden, wodurch die Griffeigenschaften auf eisigem und schneeigem Untergrund weiter verbessert sind. In diesem Zusammenhang ist es ferner vorteilhaft, wenn zumindest ein geschlossener Einschnitt vorgesehen ist, welcher sich aus einem gerade verlaufenden mittleren Abschnitt und zwei kürzer als der mittlere Abschnitt ausgeführten randseitigen Abschnitten zusammensetzt, wobei der mittlere Abschnitt mit jedem randseitigen Abschnitt, bezogen auf eine dem Einschnittverlauf folgende Verlaufsmittellinie, einen Winkel von 90° bis 130°, insbesondere von 105° bis 125°, einschließt.

Vorteilhaft ist auch eine Ausführung, bei welcher Profilblöcke mit einlaufenden Blocksegmenten vorgesehen sind, in welchen zumindest einer von mehreren geschlossenen Einschnitten entlang seiner in Erstreckungsrichtung ausgerichteten Mittellinie gerade verläuft. Dabei können auch gerade verlaufende Einschnitte mit Randabschnitten versehen sein, deren Breite größer ist als ihr mittlerer Abschnitt.

Bevorzugt weist ferner das einlaufende Blocksegment eine Außenfläche auf, welche 120 % bis 250 %, insbesondere bis zu 190 %, der Außenfläche des auslaufenden Blocksegmentes beträgt. Diese Maßnahme sorgt im einlaufenden Blocksegment für eine größere Kontaktfläche zum Untergrund, um die Brems- und Traktionseigenschaften auf Schnee und/oder Eis weiter zu verbessern.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vergrößerte Draufsicht auf einen Profilblock im mittleren Bereich eines Laufstreifens eines Fahrzeugluftreifens mit einer ersten Ausführungsvariante der Erfindung,
Fig. 2 eine vergrößerte Draufsicht auf einen schulterseitigen Profilblock mit einer zweiten Ausführungsvariante der Erfindung und
Fig. 3 eine vergrößerte Draufsicht auf einen schulterseitigen Profilblock mit einer dritten Ausführungsvariante der Erfindung.

Gemäß der Erfindung ausgeführte Fahrzeugluftreifen sind Reifen in Radialbauart, insbesondere für Personenkraftwagen, Vans oder Light-Trucks, wobei die Reifen zum Fahren unter winterlichen Fahrbedingungen besonders gut geeignet sind.

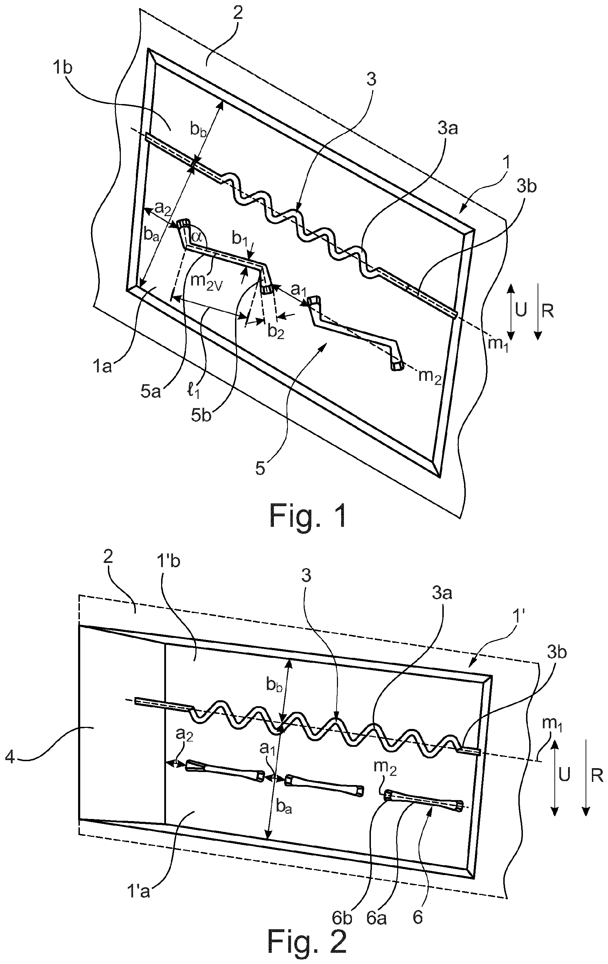

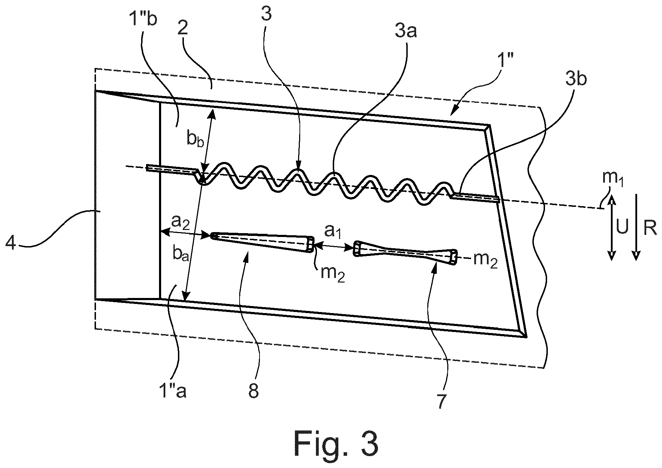

Fig. 1 bis Fig. 3 zeigt jeweils eine Draufsicht auf einen zu einem Laufstreifen eines Fahrzeugluftreifens gehörenden Profilblock 1 (Fig. 1), 1' (Fig. 2) und 1" (Fig. 3), welcher in den beiden Umfangsrichtungen (Doppelpfeil U) durch in Fig. 1 bis Fig. 3 lediglich andeutete Rillen 2 von weiteren nicht gezeigten Profilelementen, welche insbesondere ebenfalls Profilblöcke 1, 1', 1" sind, getrennt ist. Eine Vielzahl von Profilblöcken 1, 1', 1" bildet daher jeweils eine in Umfangsrichtung umlaufende Blockreihe. Die Rillen 2 verlaufen in Draufsicht gerade, parallel zueinander sowie in insbesondere bekannter Weise zur axialen Richtung unter einem Winkel von 0° bis 45° und sind in radialer Richtung entweder in der für den jeweiligen Fahrzeugluftreifen vorgesehenen Profiltiefe ausgeführt, welche üblicherweise 6,5 mm bis 13,0 mm beträgt, oder zumindest abschnittsweise seichter als diese.

Fig. 1 zeigt einen mittleren Profilblock 1 mit einer im Beispiel vereinfachten und in Draufsicht in axialer Richtung langgestreckt parallelogrammförmigen Gestalt. Fig. 2 und Fig. 3 zeigen jeweils auf analoge Weise einen vereinfachten und daher in Draufsicht ebenfalls langgestreckt parallelogrammförmigen schulterseitigen Profilblock 1' (Fig. 2) und 1" (Fig. 3).

Ein gemäß der Erfindung mit Profilblöcken 1, 1', 1" versehener Laufstreifen ist laufrichtungsgebunden ausgeführt. Der einen solchen Laufstreifen aufweisende Reifen ist derart am Fahrzeug zu montieren, dass er die durch den Pfeil R symbolisierte Abrollrichtung bei Vorwärtsfahrt aufweist. Die Laufrichtungsgebundenheit ergibt sich beispielsweise durch einen insgesamt V-förmigen Verlauf von Rillen.

Die Profilblöcke 1, 1', 1" sind jeweils von einem Einschnitt 3 durchquert, welcher sich in Draufsicht - bezogen auf seine in Erstreckungsrichtung ausgerichtete Mittellinie m₁ - parallel zu den Rillen 2 erstreckt und sich bei den gezeigten Ausführungsbeispielen aus einem in Draufsicht wellenförmig verlaufenden zentralen Abschnitt 3a und zwei in Draufsicht gerade verlaufenden Randabschnitten 3b zusammensetzt. In den schulterseitigen Profilblöcken 1', 1" läuft der durchquerende Einschnitt 3 laufstreifenaußenseitig an einer den jeweiligen Profilblock 1', 1" begrenzenden, zur nicht gezeigten Seitenwand verlaufenden Schulterflanke 4 aus (Fig. 2, Fig. 3). Die durchquerenden Einschnitte 3 weisen eine Breite von 0,4 mm bis 1,0 mm, insbesondere bis zu 0,8 mm, und in radialer Richtung eine Tiefe von bis zu 100%, insbesondere 30% bis 75%, der Profiltiefe auf.

Der durchquerende Einschnitt 3 teilt den jeweiligen Profilblock 1, 1', 1" in ein Blocksegment 1a, 1'a, 1"a und ein Blocksegment 1b, 1'b, 1"b, wobei beim Abrollen des Reifens bei Vorwärtsfahrt (Pfeil R) das Blocksegment 1a, 1'a, 1"a vor dem Blocksegment 1b, 1'b, 1"b in den Untergrund eintritt, sodass das Blocksegment 1a, 1'a, 1"a nachfolgend als "einlaufendes Blocksegment" und das Blocksegment 1b, 1'b, 1"b nachfolgend als "auslaufendes Blocksegment" bezeichnet wird. Da sich der durchquerende Einschnitt 3, wie bereits erwähnt, in Draufsicht parallel zu den Rillen 2 erstreckt, weisen die Blocksegmente 1a, 1'a, 1"a, 1b, 1'b, 1"b in den vereinfachten Beispielen in Draufsicht eine zumindest im Wesentlichen parallelogrammförmige Gestalt auf.

Die einlaufenden Blocksegmente 1a, 1'a, 1"a weisen eine größere Außenfläche auf als die auslaufenden Blocksegmente 1b, 1'b, 1"b. Bei den gezeigten Ausführungen weisen die einlaufenden Blocksegmente 1a, 1'a, 1"a jeweils eine senkrecht zur Mittellinie m₁ des angrenzenden Einschnittes 3 ermittelte Breite bₐ, die auslaufenden Blocksegmente 1b, 1'b, 1"b weisen jeweils eine auf analoge Weise ermittelte Breite b_{b} auf, wobei die Breite bₐ der einlaufenden Blocksegmente 1a, 1'a, 1"a größer ist als die Breite bb der auslaufenden Blocksegmente 1b, 1'b, 1"b und wobei die Breiten bₐ, b_{b} beim gezeigten Ausführungsbeispiel, bedingt durch die parallelogrammförmige Gestalt der Blocksegmente 1a, 1'a, 1"a, 1b, 1'b, 1"b zumindest im Wesentlichen konstant sind. Die Außenflächen der einlaufenden Blocksegmente 1a, 1'a, 1"a betragen 120% bis 250%, insbesondere bis zu 190%, der Außenflächen der auslaufenden Blocksegmente 1b, 1'b, 1"b.

In jedem Profilblock 1, 1', 1" ist das einlaufende Blocksegment 1a, 1'a, 1"a, wie nachfolgend noch genauer erläutert wird, mit zwei oder drei innerhalb des Blocksegmentes 1a, 1'a, 1"a endenden, daher nachfolgend als geschlossen bezeichneten Einschnitten 5, 6, 7, 8 versehen. Die geschlossenen Einschnitte 5, 6, 7, 8 sind in Draufsicht langgestreckt, bezogen auf ihre in Erstreckungsrichtung ausgerichteten Mittellinien m₂ hintereinander verlaufend ausgebildet, verlaufen bezüglich der Mittellinien m₁, m₂ parallel zum jeweiligen durchquerenden Einschnitt 3 und sind bezüglich ihrer Mittellinien m₂ und der Breite bₐ des Blocksegmentes 1a, 1'a, 1"a zumindest im Wesentlichen in der Mitte des Blocksegmentes 1a, 1'a, 1"a ausgebildet. Die jeweils innerhalb eines Blocksegmentes 1a, 1'a, 1"a befindlichen geschlossenen Einschnitte 5, 6, 7, 8 weisen - ermittelt in Erstreckungsrichtung ihrer Mittellinien m₂ - voneinander einen Abstand a₁ von 1,0 mm bis 5,0 mm und zu den Rändern des Blocksegmentes 1a, 1'a, 1"a einen Abstand a₂ von 1,0 mm bis 5,0 mm auf.

Wie Fig. 1 zeigt, ist das zum Profilblock 1 gehörende einlaufende Blocksegment 1a mit zwei geschlossenen Einschnitten 5 versehen, welche sich in Draufsicht jeweils derart aus einem gerade verlaufenden mittleren Abschnitt 5a und zwei randseitigen Abschnitten 5b zusammensetzen, dass jeder geschlossene Einschnitt 5 in Draufsicht insgesamt flach N-förmig, beim gezeigten Ausführungsbeispiel gespiegelt N-förmig verläuft. Der mittlere Abschnitt 5a erstreckt sich im Wesentlichen in axialer Richtung, die randseitigen Abschnitte 5b weisen in entgegengesetzte Umfangsrichtungen. Ferner schließt der mittlere Abschnitt 5a mit jedem randseitigen Abschnitt 5b - bezogen auf eine dem Einschnittverlauf folgende Verlaufsmittellinie m₂ᵥ - einen Winkel α von 90° bis 130°, insbesondere von 105° bis 125°, ein. Der mittlere Abschnitt 5a weist - ermittelt an der Verlaufsmittellinie m₂ᵥ - eine Länge l₁ von 50% bis 75%, insbesondere von 60% bis 70%, der ebenfalls entlang der Verlaufsmittellinie m₂ᵥ ermittelten Länge des Einschnittes 5 auf. Ferner wird der mittlere Abschnitt 5a ausgehend von seiner Mitte in Richtung zu den randseitigen Abschnitten 5b kontinuierlich breiter, wobei er an seiner schmalsten Stelle eine Breite b₁ von 0,4 mm bis 1,0 mm aufweist. Die randseitigen Abschnitte 5b weisen - unter Vernachlässigung etwaiger endseitiger Rundungen - eine zu ihren freien Enden kontinuierlich zunehmende Breite und an ihren freien Enden eine Breite b₂ von 130% bis 350%, insbesondere von mindestens 200%, der Breite b₁ auf.

Gemäß Fig. 2 ist das zum Profilblock 1' gehörende einlaufende Blocksegment 1'a mit drei geschlossenen Einschnitten 6 versehen. Jeder geschlossene Einschnitt 6 verläuft - bezogen auf die in ihrer Erstreckungsrichtung ausgerichteten Mittellinie m₂ - gerade, setzt sich in Draufsicht aus einem mittleren Abschnitt 6a und zwei randseitigen Abschnitten 6b zusammen und ist bezüglich der Mittellinie m₂ symmetrisch ausgeführt. Der mittlere Abschnitt 6a weist eine ausgehend von seiner Mitte in Richtung zu den randseitigen Abschnitten 6b kontinuierlich zunehmende Breite auf. Die randseitigen Abschnitte 6b weisen - unter Vernachlässigung etwaiger endseitiger Rundungen - eine zu ihren freien Enden kontinuierlich zunehmende Breite auf, wobei die Größe der Breite analog zu den Breiten b₁, b₂ der in Fig. 1 gezeigten und bereites beschriebenen Variante gewählt sein kann. Die Länge des mittleren Abschnittes 6a entspricht insbesondere der Länge des mittleren Abschnitt 5a der in Fig. 1 gezeigten Variante.

Bei der Variante in Fig. 3 ist das einlaufende Blocksegment 1"a des Profilblockes 1" mit zwei geschlossenen Einschnitten 7, 8 versehen, wobei sich der geschlossene Einschnitt 8 näher zur Schulterflanke 4 befindet als der geschlossene Einschnitt 7. Der geschlossene Einschnitt 7 ist analog zu einem der bereits erwähnten geschlossenen Einschnitte 6 (Fig. 2) gestaltet, ist gegebenenfalls gegenüber diesen geringfügig breiter und länger. Der geschlossene Einschnitt 8 ist in Draufsicht langgestreckt dreieckförmig und bezüglich seiner Mittellinie m₂ symmetrisch ausgeführt, wobei der Einschnitt 8 eine von seinem laufstreifenaußenseitigen Ende zu seinem laufstreifeninnenseitigen Ende kontinuierlich zunehmende Breite aufweist.

Die Erfindung ist auf die beschriebenen Ausführungsbeispiele nicht beschränkt.

Die Gestalt der Profilblöcke kann von jener der in den Figuren gezeigten Profilblöcke abweichen.

Die Profilblöcke können ferner mit mehreren, den jeweiligen Profilblock durchquerenden, in Draufsicht parallel zueinander verlaufenden Einschnitten versehen sein, sodass die Profilblöcke mehr als zwei Blocksegmente aufweisen. Darüber hinaus können die Profiblöcke insbesondere in an sich bekannter Weise mit Mikrorillen versehen sein, welche seichter als die Einschnitte ausgeführt sind.

Die Breite eines Blocksegmentes ist jeweils senkreckt zu der bzw. den Mittellinie(n) des durchquerenden Einschnittes bzw. der durchquerenden Einschnitte sowie an der breitesten Stelle des Blocksegmentes ermittelt.

Sämtliche beschriebenen Ausführungen von mittleren und schulterseitigen Profilblöcken können innerhalb eines Laufstreifens miteinander beliebig kombiniert werden.

### Bezugsziffernliste

- 1, 1', 1"...........: Profilblock
- 1a, 1'a, 1"a.....: einlaufendes Blocksegment
- 1b, 1'b, 1"b.....: auslaufendes Blocksegment
- 2 ......................: Rille
- 3 ......................: durchquerender Einschnitt
- 3a....................: zentraler Abschnitt
- 3b....................: Randabschnitt
- 4 ......................: Schulterflanke
- 5, 6, 7, 8...........: geschlossener Einschnitt
- 5a ....................: mittlerer Abschnitt
- 5b ....................: randseitiger Abschnitt
- a₁,a₂.................: Abstand
- b₁, b_{b}, bₐ, b_{b}......: Breite
- l₁......................: Länge
- m₁, m₂..............: Mittellinie
- m₂ᵥ ..................: Verlaufsmittellinie
- R .....................: Pfeil (Abrollrichtung)
- U .....................: Doppelpfeil (Umfangsrichtung)
- α......................: Winkel

## Patentansprüche

1. Fahrzeugluftreifen mit einem laufrichtungsgebunden profilierten Laufstreifen mit Profilblöcken (1, 1', 1") mit jeweils einem oder mehreren parallel zueinander ausgerichteten, unter einem Winkel von 0° bis zu 45° zur axialen Richtung verlaufenden, den jeweiligen Profilblock (1, 1', 1") durchquerenden Einschnitt(en) (3) mit einer Breite von 0,4 mm bis 1,0 mm und einer Tiefe von bis zu 100% der Profiltiefe, wobei die durchquerenden Einschnitte (3) die Profilblöcke (1, 1', 1") in Blocksegmente (1a, 1'a, 1"a, 1b, 1'b, 1"b) gliedern, sodass die Profilblöcke (1, 1', 1") beim Abrollen des Reifens bei Vorwärtsfahrt jeweils ein zuerst in den Untergrund eintretendes randseitiges, einlaufendes Blocksegment (1a, 1'a, 1"a) und jeweils ein randseitiges, auslaufendes Blocksegment (1b, 1'b, 1"b) aufweisen,
**dadurch gekenzeichnet**,
dass das einlaufende Blocksegment (1a, 1'a, 1"a) eine größere Außenfläche aufweist als das auslaufende Blocksegment (1b, 1'b, 1"b), wobei das einlaufende Blocksegment (1a, 1'a, 1"a) mit zumindest einem, bezogen auf seine Längserstreckung parallel zu dem bzw. den durchquerenden Einschnitt(en) (3) verlaufenden, geschlossenen Einschnitt (5, 6, 7, 8) mit einer Tiefe von bis zu 100% der Profiltiefe versehen ist, wobei das auslaufende Blocksegment (1b, 1'b, 1"b) keinen geschlossenen Einschnitt aufweist und wobei der zumindest eine geschlossene Einschnitt (5, 6, 7, 8) eine sich über seine Erstreckung ändernde Breite (b₁, b₂) aufweist, welche an einem seiner oder an beiden seiner Enden am größten ist, wobei die Breite (b₂) an der bzw. den breitesten Stelle(n) des zumindest einen geschlossenen Einschnittes (5, 6, 7, 8) 130% bis 350%, insbesondere mindestens 200%, der Breite (b₁) an seiner schmalsten Stelle entspricht.

2. Fahrzeugluftreifen nach Anspruch 1, **dadurch gekennzeichnet, dass** das einlaufende Blocksegment (1a, 1'a, 1"a) mit zumindest zwei - bezogen auf ihre Längserstreckung - aufeinanderfolgenden, parallel zu dem bzw. den durchquerenden Einschnitt(en) (3) verlaufenden, geschlossenen Einschnitten (5, 6, 7, 8) versehen ist.

3. Fahrzeugluftreifen nach Anspruch 1 oder 2, **dadurch gekennzeichnet, dass** Profilblöcke (1, 1', 1") vorgesehen sind, deren einlaufenden Blocksegmente (1a, 2a) jeweils drei geschlossene Einschnitte (5, 6, 7, 8) aufweisen.

4. Fahrzeugluftreifen nach einem der Ansprüche 1 bis 3, **dadurch gekennzeichnet, dass** der/die geschlossene(n) Einschnitt(e) (5, 6, 7, 8) der/die einzige(n) Einschnitt(e) (5, 6, 7, 8) im einlaufenden Blocksegment (1a, 1'a, 1"a) ist bzw. sind.

5. Fahrzeugluftreifen nach einem der Ansprüche 1 bis 4, **dadurch gekennzeichnet, dass** die Breite (b₁) an der schmalsten Stelle der bzw. des geschlossenen Einschnitte(s) (5, 6, 7, 8) 0,4 mm bis 1,0 mm beträgt.

6. Fahrzeugluftreifen nach einem der Ansprüche 1 bis 5, **dadurch gekennzeichnet, dass** mehrere geschlossene Einschnitte (8) vorgesehen sind, deren jeweilige Breite kontinuierlich über ihre Erstreckung zunimmt.

7. Fahrzeugluftreifen nach einem der Ansprüche 1 bis 6, **dadurch gekennzeichnet, dass** mehrere geschlossene Einschnitte (5, 6, 7) vorgesehen sind, welche jeweils einen schmäler als ihre sonstigen Abschnitte (5a, 5b) ausgeführten mittleren Abschnitt (5a, 6a) mit einer Länge (l₁) von 50% bis 75%, insbesondere von 60% bis 70%, der Länge des Einschnittes (5, 6, 7) aufweisen, wobei die Längen an der Verlaufsmittellinie (m₂ᵥ) des Einschnittes (5, 6, 7) ermittelt sind.

8. Fahrzeugluftreifen nach einem der Ansprüche 1 bis 7, **dadurch gekennzeichnet, dass** der bzw. die geschlossene(n) Einschnitt(e) (5, 6, 7, 8) im mittleren Bereich des einlaufenden Blocksegments (1a, 1'a, 1"a) ausgebildet ist bzw. sind.

9. Fahrzeugluftreifen nach einem der Ansprüche 1 bis 8, **dadurch gekennzeichnet, dass** geschlossene Einschnitte (5, 6, 7, 8), welche sich im selben einlaufenden Blocksegment (1a, 1'a, 1"a) befinden, in ihrer Erstreckungsrichtung voneinander einen Abstand (a₁) von 1,0 mm bis 5,0 mm aufweisen.

10. Fahrzeugluftreifen nach einem der Ansprüche 1 bis 9, **dadurch gekennzeichnet, dass** geschlossene Einschnitte (5, 6, 7, 8), welche sich im selben einlaufenden Blocksegment (1a, 1'a, 1"a) befinden, in ihrer Erstreckungsrichtung zu den Rändern des einlaufenden Blocksegmentes (1a, 1'a, 1"a) einen Abstand (a₂) von 1,0 mm bis 5,0 mm aufweisen.

11. Fahrzeugluftreifen nach einem der Ansprüche 1 bis 10, **dadurch gekennzeichnet, dass** Profilblöcke (1) mit einlaufenden Blocksegmenten (1a) vorgesehen sind, in welchen zumindest einer der geschlossenen Einschnitte (5) in Draufsicht flach N-förmig verläuft.

12. Fahrzeugluftreifen nach einem der Ansprüche 1 bis 11, **dadurch gekennzeichnet, dass** zumindest ein geschlossener Einschnitt (5) vorgesehen ist, welcher sich aus einem gerade verlaufenden mittleren Abschnitt (5a) und zwei kürzer als der mittlere Abschnitt (5a) ausgeführten randseitigen Abschnitten (5b) zusammensetzt, wobei der mittlere Abschnitt (5a) mit jedem randseitigen Abschnitt (5b) - bezogen auf eine dem Einschnittverlauf folgende Verlaufsmittellinie (m₂ᵥ) - einen Winkel (α) von 90° bis 130°, insbesondere von 105° bis 125°, einschließt.

13. Fahrzeugluftreifen nach einem der Ansprüche 1 bis 12, **dadurch gekennzeichnet, dass** Profilblöcke (1) mit einlaufenden Blocksegmenten (1a) vorgesehen sind, in welchen zumindest einer von mehreren geschlossenen Einschnitten (6) entlang seiner in Erstreckungsrichtung ausgerichtete Mittellinie (m₂) gerade verläuft.

14. Fahrzeugluftreifen nach einem der Ansprüche 1 bis 13, **dadurch gekennzeichnet, dass** das einlaufende Blocksegment (1a, 1'a, 1"a) eine Außenfläche aufweist, welche 120% bis 250%, insbesondere bis zu 190%, der Außenfläche des auslaufenden Blocksegmentes (1b, 1'b, 1"b) beträgt.

## Claims

1. Pneumatic vehicle tyre having a directional profiled tread with profile blocks (1, 1', 1") each having one or more sipes (3) which are oriented parallel to one another, run at an angle of 0° to 45° to the axial direction, traverse the respective profile block (1, 1', 1") and have a width of 0.4 mm to 1.0 mm and a depth of up to 100% of the profile depth, wherein the traversing sipes (3) divide the profile blocks (1, 1', 1") into block segments (1a, 1'a, 1"a, 1b, 1'b, 1"b), with the result that, during rolling of the tyre during forward travel, the profile blocks (1, 1', 1") each have an edge-side, leading block segment (1a, 1'a, 1"a) which contacts the ground first and each have an edge-side, trailing block segment (1b, 1'b, 1"b),
**characterized**
**in that** the leading block segment (1a, 1'a, 1"a) has a larger outer surface than the trailing block segment (1b, 1'b, 1"b), wherein the leading block segment (1a, 1'a, 1"a) is provided with at least one closed sipe (5, 6, 7, 8) which, with respect to its longitudinal extent, runs parallel to the traversing sipe(s) (3) and which has a depth of up to 100% of the profile depth, wherein the trailing block segment (1b, 1'b, 1"b) does not have a closed sipe and wherein the at least one closed sipe (5, 6, 7, 8) has a width (b₁, b₂) which changes over its extent and which is largest at one of its or at both of its ends, wherein the width (b₂) at the widest point(s) of the at least one closed sipe (5, 6, 7, 8) corresponds to 130% to 350%, in particular at least 200%, of the width (b₁) at its narrowest point.

2. Pneumatic vehicle tyre according to Claim 1, **characterized in that** the leading block segment (1a, 1'a, 1"a) is provided with at least two closed sipes (5, 6, 7, 8) which - with respect to their longitudinal extent - follow one another and run parallel to the traversing sipe(s) (3).

3. Pneumatic vehicle tyre according to Claim 1 or 2, **characterized in that** profile blocks (1, 1', 1") are provided whose leading block segments (1a, 2a) each have three closed sipes (5, 6, 7, 8).

4. Pneumatic vehicle tyre according to one of Claims 1 to 3, **characterized in that** the closed sipe(s) (5, 6, 7, 8) is or are the only sipe(s) (5, 6, 7, 8) in the leading block segment (1a, 1'a, 1"a).

5. Pneumatic vehicle tyre according to one of Claims 1 to 4, **characterized in that** the width (b₁) at the narrowest point of the closed sipe(s) (5, 6, 7, 8) is 0.4 mm to 1.0 mm.

6. Pneumatic vehicle tyre according to one of Claims 1 to 5, **characterized in that** a plurality of closed sipes (8) are provided whose respective width continuously increases over its extent.

7. Pneumatic vehicle tyre according to one of Claims 1 to 6, **characterized in that** a plurality of closed sipes (5, 6, 7) are provided which each have a central portion (5a, 6a), which is configured to be narrower than their other portions (5a, 5b), with a length (l₁) of 50% to 75%, in particular of 60% to 70%, of the length of the sipe (5, 6, 7), wherein the lengths are determined on the profile centre line (m₂ᵥ) of the sipe (5, 6, 7) .

8. Pneumatic vehicle tyre according to one of Claims 1 to 7, **characterized in that** the closed sipe(s) (5, 6, 7, 8) is or are formed in the central region of the leading block segment (1a, 1'a, 1"a).

9. Pneumatic vehicle tyre according to one of Claims 1 to 8, **characterized in that** closed sipes (5, 6, 7, 8) which are situated in the same leading block segment (1a, 1'a, 1"a) have, in their direction of extent, a distance (a₁) of 1.0 mm to 5.0 mm from one another.

10. Pneumatic vehicle tyre according to one of Claims 1 to 9, **characterized in that** closed sipes (5, 6, 7, 8) which are situated in the same leading block segment (1a, 1'a, 1"a) have, in their direction of extent, a distance (a₂) of 1.0 mm to 5.0 mm from the edges of the leading block segment (1a, 1'a, 1"a).

11. Pneumatic vehicle tyre according to one of Claims 1 to 10, **characterized in that** profile blocks (1) are provided with leading block segments (1a) in which at least one of the closed sipes (5) runs in a flat N shape as seen in plan view.

12. Pneumatic vehicle tyre according to one of Claims 1 to 11, **characterized in that** at least one closed sipe (5) is provided which is composed of a rectilinearly running central portion (5a) and of two edge-side portions (5b) which are configured to be shorter than the central portion (5a), wherein the central portion (5a) encloses with each edge-side portion (5b) - with respect to a profile centre line (m₂ᵥ) following the sipe profile - an angle (α) of 90° to 130°, in particular of 105° to 125°.

13. Pneumatic vehicle tyre according to one of Claims 1 to 12, **characterized in that** profile blocks (1) are provided with leading block segments (1a) in which at least one of a plurality of closed sipes (6) runs rectilinearly along its centre line (m₂) oriented in the direction of extent.

14. Pneumatic vehicle tyre according to one of Claims 1 to 13, **characterized in that** the leading block segment (1a, 1'a, 1"a) has an outer surface which is 120% to 250%, in particular up to 190%, of the outer surface of the trailing block segment (1b, 1'b, 1"b).

## Revendications

1. Pneumatique de véhicule muni d'une bande de roulement profilée directionnelle munie de blocs profilés (1, 1', 1'') chacun munis d'une ou de plusieurs entailles (3) orientées parallèlement les unes aux autres, s'étendant à un angle de 0° à 45° par rapport à la direction axiale, traversant le bloc profilé respectif (1, 1', 1"), ayant une largeur de 0,4 mm à 1,0 mm et une profondeur de jusqu'à 100 % de la profondeur du profilé, les entailles traversantes (3) divisant les blocs profilés (1, 1', 1'') en segments de blocs (1a, 1'a, 1"a, 1b, 1'b, 1"b), de telle sorte que les blocs profilés (1, 1', 1'') comprennent chacun, lorsque le pneu roule en marche avant, un segment de bloc entrant (1a, 1'a, 1"a), sur le bord, pénétrant en premier dans le sol, et un segment de bloc sortant (1b, 1'b, 1"b), sur le bord,
**caractérisé en ce que**
le segment de bloc entrant (1a, 1'a, 1"a) présente une surface extérieure plus grande que le segment de bloc sortant (1b, 1'b, 1"b), le segment de bloc entrant (1a, 1'a, 1"a) étant muni d'au moins une entaille fermée (5, 6, 7, 8) s'étendant parallèlement à l'entaille traversante ou aux entailles traversantes (3), par rapport à son extension longitudinale, ayant une profondeur de jusqu'à 100 % de la profondeur du profilé, le segment de bloc sortant (1b, 1'b, 1"b) ne comprenant pas d'entaille fermée, et l'au moins une entaille fermée (5, 6, 7, 8) présentant une largeur (b₁, b₂) qui varie sur son extension, qui est la plus grande à une de ses ou à ses deux extrémités, la largeur (b₂) à l'emplacement ou aux emplacements les plus larges de l'au moins une entaille fermée (5, 6, 7, 8) correspondant à 130 % à 350 %, notamment au moins 200 %, de la largeur (b₁) à son emplacement le plus étroit.

2. Pneumatique de véhicule selon la revendication 1, **caractérisé en ce que** le segment de bloc entrant (1a, 1'a, 1"a) est muni d'au moins deux entailles fermées (5, 6, 7, 8) successives, par rapport à leur extension longitudinale, s'étendant parallèlement à l'entaille traversante ou aux entailles traversantes (3).

3. Pneumatique de véhicule selon la revendication 1 ou 2, **caractérisé en ce que** des blocs profilés (1, 1', 1") dont les segments de bloc entrants (1a, 2a) comprennent chacun trois entailles fermées (5, 6, 7, 8) sont prévus.

4. Pneumatique de véhicule selon l'une quelconque des revendications 1 à 3, **caractérisé en ce que** la/les entaille (s) fermée (s) (5, 6, 7, 8) est ou sont la/les entaille (s) unique (s) (5, 6, 7, 8) dans le segment de bloc entrant (1a, 1'a, 1"a).

5. Pneumatique de véhicule selon l'une quelconque des revendications 1 à 4, **caractérisé en ce que** la largeur (b₁) à l'emplacement le plus étroit de la ou des entaille (s) fermée(s) (5, 6, 7, 8) est de 0,4 mm à 1,0 mm.

6. Pneumatique de véhicule selon l'une quelconque des revendications 1 à 5, **caractérisé en ce que** plusieurs entailles fermées (8) dont la largeur respective augmente continuellement sur leur extension sont prévues.

7. Pneumatique de véhicule selon l'une quelconque des revendications 1 à 6, **caractérisé en ce que** plusieurs entailles fermées (5, 6, 7) sont prévues, qui comprennent chacune une section centrale (5a, 6a) réalisée plus étroite que leurs autres sections (5a, 5b), ayant une longueur (l₁) de 50 % à 75 %, notamment de 60 % à 70 %, de la longueur de l'entaille (5, 6, 7), les longueurs étant déterminées au niveau de la ligne centrale d'étendue (m₂ᵥ) de l'entaille (5, 6, 7).

8. Pneumatique de véhicule selon l'une quelconque des revendications 1 à 7, **caractérisé en ce que** la ou les entaille(s) fermée(s) (5, 6, 7, 8) est ou sont formées dans la zone centrale du segment de bloc entrant (1a, 1'a, 1"a).

9. Pneumatique de véhicule selon l'une quelconque des revendications 1 à 8, **caractérisé en ce que** des entailles fermées (5, 6, 7, 8), qui se trouvent dans le même segment de bloc entrant (1a, 1'a, 1"a), présentent un écartement (a₁) les unes des autres dans leur direction d'extension de 1,0 mm à 5,0 mm.

10. Pneumatique de véhicule selon l'une quelconque des revendications 1 à 9, **caractérisé en ce que** des entailles fermées (5, 6, 7, 8), qui se trouvent dans le même segment de bloc entrant (1a, 1'a, 1''a), présentent un écartement (a₂) par rapport aux bords du segment de bloc entrant (1a, 1'a, 1"a) dans leur direction d'extension de 1,0 mm à 5,0 mm.

11. Pneumatique de véhicule selon l'une quelconque des revendications 1 à 10, **caractérisé en ce que** des blocs profilés (1) munis de segments de bloc entrants (1a) sont prévus, dans lesquels au moins une des entailles fermées (5) s'étend à plat en forme de N en vue de dessus.

12. Pneumatique de véhicule selon l'une quelconque des revendications 1 à 11, **caractérisé en ce qu'**au moins une entaille fermée (5) qui se compose d'une section centrale (5a) s'étendant sous forme droite et de deux sections de bord (5b) réalisées plus courtes que la section centrale (5a) est prévue, la section centrale (5a) formant avec chaque section de bord (5b), par rapport à une ligne centrale d'étendue (m₂ᵥ) suivant l'étendue d'entaille, un angle (α) de 90° à 130°, notamment de 105° à 125°.

13. Pneumatique de véhicule selon l'une quelconque des revendications 1 à 12, **caractérisé en ce que** des blocs profilés (1) munis de segments de bloc entrants (1a) sont prévus, dans lesquels au moins une parmi plusieurs entailles fermées (6) s'étend sous forme droite le long de sa ligne centrale (m₂) dirigée dans la direction d'extension.

14. Pneumatique de véhicule selon l'une quelconque des revendications 1 à 13, **caractérisé en ce que** le segment de bloc entrant (1a, 1'a, 1"a) présente une surface extérieure qui est de 120 % à 250 %, notamment de jusqu'à 190 %, de la surface extérieure du segment de bloc sortant (1b, 1'b, 1"b).
